# EUROPÄISCHE PATENTANMELDUNG

(11) **EP 1 918 139 A1**
(43) Veröffentlichungstag der Anmeldung: **07.05.2008**
(21) Anmeldenummer: 07017358.8
(22) Anmeldetag: 05.09.2007
(51) Int. Cl.: B60H 1/00

(54) **Klimaanlage für Fahrzeuge**

(30) Priorität: 31.10.2006 DE 102006051231
(71) Anmelder: Bayerische Motoren Werke Aktiengesellschaft, 80809 München (DE)
(72) Erfinder: Rühl, Gerald, 81247 München (DE)

(57) **Zusammenfassung**

Klimaanlage für Fahrzeuge, insbesondere für Hybrid-Fahrzeuge, mit
- einem Klimaanlagenkreislauf, der mindestens einen Verdampfer zum Kühlen von Luft aufweist,
- vier Kühlkanalsystemen, die dazu vorgesehen sind, vier Fahrzeugbereiche individuell und unabhängig voneinander zu temperieren, wobei
• ein erster Kühlkanal vorgesehen ist, über den ein Fahrerbereich eines Fahrgastraums des Fahrzeugs mit kühler Luft versorgt wird,
• ein zweiter Kühlkanal, über den ein Beifahrerbereich des Fahrgastraums mit kühler Luft versorgt wird,
• ein dritter Kühlkanal, über den ein Fondbereich des Fahrgastraums mit kühler Luft versorgt wird, und
• ein vierter Kühlkanal, über den ein vierter Bereich des Fahrzeugs mit kühler Luft versorgt wird.
Der vierte Bereich des Fahrzeugs ist ein Bereich, in dem ein Energiespeicher bzw. ein Energiewandler des Fahrzeugs angeordnet ist.

## Beschreibung

Die vorliegende Erfindung betrifft eine Klimaanlage für Fahrzeuge gemäß dem Oberbegriff des Patentanspruches 1.

Hybrid-Fahrzeuge sind mit elektrischen Energiespeichern (Akkumulatoren) ausgestattet. Für einen optimalen Wirkungsgrad sollte die Betriebstemperatur des Energiespeichers nicht zu hoch werden. Insbesondere bei hohen Außentemperaturen ist daher eine Kühlung erforderlich.

Moderne hochpreisige Fahrzeuge sind mit einer "4-Zonen-Klimaanlage" ausgestattet, d.h. mit einer Klimaanlage, die es ermöglicht, vier Bereiche im Fahrzeug unabhängig voneinander zu temperieren. "4-Zonen-Klimaanlagen" können mit mehreren Verdampfern dargestellt werden. Es sind aber nicht zwingend mehrere Verdampfer erforderlich. Vier unabhängig voneinander klimatisierbare Temperaturzonen bzw. Temperaturbereiche können auch mit einem Verdampfer und einer entsprechend gestalteten, durch Klappen und Ventilatoren gesteuerten Strömungsführung dargestellt werden.

Aufgabe der Erfindung ist es, eine "4-Zonen-Klimaanlage" zu schaffen, die eine effektive und effiziente Temperierung eines Energiespeichers bzw. Energiewandlers, insbesondere eines Hybrid-Fahrzeugs, ermöglicht.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist eine Klimaanlage für Fahrzeuge, insbesondere für Hybrid-Fahrzeuge, die einen Klimaanlagen-Kreislauf bzw. einen Kältekreislauf mit mindestens einem Verdampfer aufweist, der zum Kühlen von Luft vorgesehen ist. Die Klimaanlage weist ferner vier "Kühlkanalsysteme" auf, die eine individuelle Temperierung von vier Fahrzeugbereichen ermöglichen. Ein erster Kühlkanal bzw. ein erstes Kühlkanalsystem ist dazu vorgesehen, einen Fahrerbereich eines Fahrgastraums des Fahrzeugs mit kühler Luft zu versorgen. Ein zweiter Kühlkanal bzw. ein zweites Kühlkanalsystem ist dazu vorgesehen, unabhängig vom Fahrerbereich den Beifahrerbereich des Fahrgastraums mit kühler Luft zu versorgen. Über einen dritten Kühlkanal bzw. über ein drittes Kühlkanalsystem wird der Fondbereich des Fahrgastraums unabhängig vom Fahrerbereich und unabhängig vom Beifahrerbereich mit kühler Luft versorgt. Ferner ist ein vierter Kühlkanal bzw. ein viertes Kühlkanalsystem vorgesehen, über den ein "vierter Bereich" des Fahrzeugs mit kühler Luft versorgt wird.

Der Kern der Erfindung besteht darin, dass die ersten drei Kühlkanäle bzw. Kühlkanalsysteme zur Temperierung der drei Temperaturbereiche des Fahrgastraums verwendet werden und dass der vierte Kühlkanal bzw. das vierte Kühlkanalsystem zur Temperierung eines Energiespeichers bzw. eines Energiewandlers des Fahrzeugs verwendet wird. Der "vierte Bereich" ist also ein Bereich, in dem ein Energiespeicher bzw. ein Energiewandler des Fahrzeugs angeordnet ist.

Bei dem Energiespeicher bzw. Energiewandler handelt es sich um eine "Einheit", die elektrische Energie aufnimmt bzw. abgibt, z.B. um einen Akkumulatorblock, eine Kondensatoranordnung o.ä.

Der Energiespeicher bzw. Energiewandler kann z.B. im Bodenbereich des Fahrzeugs, d.h. unter dem Fahrgastraum oder im Heck- bzw. Gepäckraumbereich des Fahrzeugs in einem separaten Kompartiment angeordnet sein. Prinzipiell ist aber auch eine andere Anordnung im Fahrzeug denkbar.

Nach einer Weiterbildung der Erfindung weist die Klimaanlage genau einen Verdampfer auf. Ein-Verdampfer-Systeme sind wesentlich kostengünstiger als Klimaanlagen mit zwei oder mehreren Verdampfern. Die Temperierung der einzelnen Temperaturzonen erfolgt bei Ein-Verdampfer-Systemen ausschließlich über die Stellungen einzelner Klappen der Klimaanlage bzw. über die Gebläseleistung.

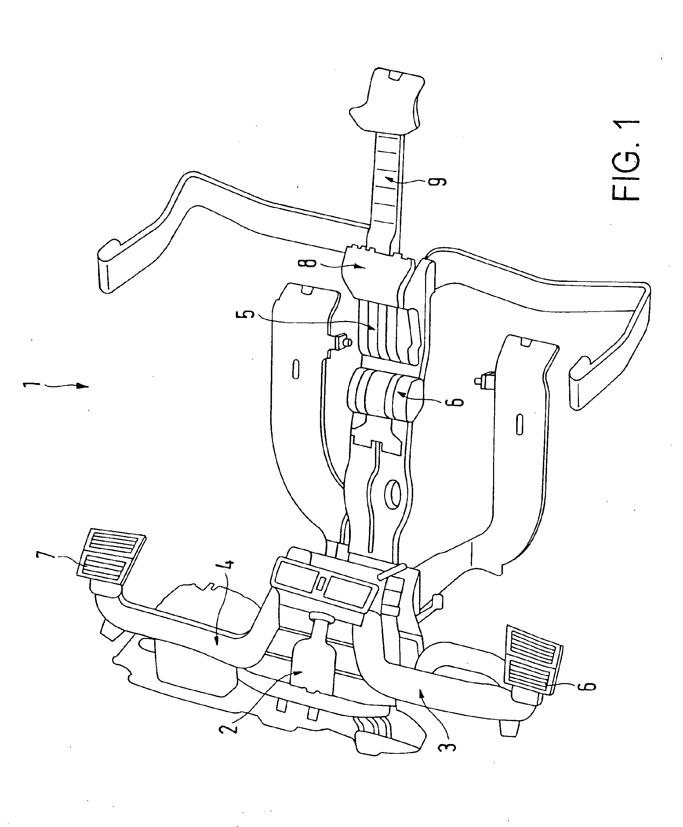

Im Folgenden wird die Erfindung im Zusammenhang mit der Zeichnung näher erläutert. Die einzige Figur 1 zeigt das Grundprinzip der Erfindung in schematischer Darstellung.

Figur 1 zeigt das Luftkanalsystem einer "Vier-Zonen-Klimaanlage". Die Klimaanlage 1 weist ein zentrales Gebläse 2 auf sowie vier unabhängig voneinander beaufschlagbare Kühlkanalsysteme bzw. Kühlkanäle 3, 4, 5. Über den Kühlkanal 3 wird der Fahrerbereich des hier nicht näher dargestellten Fahrzeugs temperiert. Über den Kühlkanal 4 wird der Beifahrerbereich des Fahrgastraums temperiert und über den Kühlkanal 5, in dem ein zusätzliches Gebläse angeordnet ist, wird der Fondbereich des Fahrgastraums des Fahrzeugs temperiert, wobei die Luft aus den einzelnen Kühlkanälen über einen Fahrergrill 6, einen Beifahrergrill 7 bzw. einem dem Fondbereich zugeordneten zentral angeordneten Fondgrill 8 mit Luft versorgt werden. Ein vierter Kühlkanal bzw. ein viertes Kühlkanalsystem 9 wird weiter nach hinten in ein unterhalb des Gepäckraumbereichs des Fahrzeugs angeordnetes Kompartiment geleitet, in dem ein hier nicht näher dargestellter elektrischer Energiespeicher angeordnet ist. Über den vierten Kühlkanal 9 kann dieses Kompartiment unabhängig von den drei Temperaturzonen des Fahrgastraumbereichs temperiert werden.

## Patentansprüche

1. Klimaanlage (1) für Fahrzeuge, insbesondere für Hybrid-Fahrzeuge, mit
- einem Klimaanlagenkreislauf, der mindestens einen Verdampfer zum Kühlen von Luft aufweist,
- vier Kühlkanalsystemen (3 - 5, 9), die dazu vorgesehen sind, vier Fahrzeugbereiche individuell und unabhängig voneinander zu temperieren, wobei
• ein erster Kühlkanal (3) vorgesehen ist, über den ein Fahrerbereich eines Fahrgastraums des Fahrzeugs mit kühler Luft versorgt wird,
• ein zweiter Kühlkanal (4), über den ein Beifahrerbereich des Fahrgastraums mit kühler Luft versorgt wird,
• ein dritter Kühlkanal (5), über den ein Fondbereich des Fahrgastraums mit kühler Luft versorgt wird, und
• ein vierter Kühlkanal (9), über den ein vierter Bereich des Fahrzeugs mit kühler Luft versorgt wird,
**dadurch gekennzeichnet, dass** der vierte Bereich des Fahrzeugs ein Bereich ist, in dem ein Energiespeicher bzw. ein Energiewandler des Fahrzeugs angeordnet ist.

2. Klimaanlage (1) nach Anspruch 1,
**dadurch gekennzeichnet, dass** der Energiespeicher bzw. Energiewandler elektrische Energie aufnimmt bzw. abgibt.

3. Klimaanlage (1) nach Anspruch 1 oder 2,
**dadurch gekennzeichnet, dass** der Energiespeicher bzw. Energiewandler ein Akkumulator ist.

4. Klimaanlage (1) nach einem der Ansprüche 1 bis 3,
**dadurch gekennzeichnet, dass** der vierte Bereich ein in einem Heck- bzw. Gepäckraumbereich des Fahrzeugs vorgesehenes Kompartiment ist.
